Europäisches Patentamt

European Patent Office

Office européen des brevets

(11) Veröffentlichungsnummer: **0 223 041 B1**

(12) **EUROPÄISCHE PATENTSCHRIFT**

(45) Veröffentlichungstag der Patentschrift: **15.04.92**

(51) Int. Cl.5: **G06K 1/12**, B07C 1/00, B42F 21/00

(21) Anmeldenummer: **86113918.6**

(22) Anmeldetag: **07.10.86**

(54) **Verfahren zum Markieren von flächigen Papiererzeugnissen.**

(30) Priorität: **31.10.85 CH 4681/85**

(43) Veröffentlichungstag der Anmeldung:
**27.05.87 Patentblatt 87/22**

(45) Bekanntmachung des Hinweises auf die
Patenterteilung:
**15.04.92 Patentblatt 92/16**

(84) Benannte Vertragsstaaten:
**DE GB SE**

(56) Entgegenhaltungen:
WO-A-82/03205      CH-A- 523 787
DE-A- 2 447 336    DE-A- 3 132 765
FR-A- 1 471 367    FR-A- 2 030 572
GB-A- 2 082 503    US-A- 4 201 617
US-A- 4 204 640    US-A- 4 752 684

(73) Patentinhaber: **Ferag AG**

**CH-8340 Hinwil(CH)**

(72) Erfinder: **Herrmann, Rudolf**
**Frowiesstrasse 13**
**CH-8345 Adetswil(CH)**

(74) Vertreter: **Patentanwälte Schaad, Balass &
Partner**
**Dufourstrasse 101 Postfach**
**CH-8034 Zürich(CH)**

## Beschreibung

Die vorliegende Erfindung betrifft ein Verfahren zum Ueberprüfen auf Vollständigkeit von Druckerei-Endprodukten gemäss Oberbegriff des Anspruches 1.

Es ist bekannt, zur Ueberprüfung der Vollständigkeit von aus mehreren Teilprodukten zusammengesetzten Endprodukten die Dicke der einzelnen Endprodukte mechanisch abzutasten (CH-A-523 787). Wird dabei festgestellt, dass die ermittelte Dicke von einem Sollwert abweicht, so wird entweder die nachfolgende Bearbeitungsmaschine stillgesetzt oder das entsprechende Endprodukt über eine Auswerfweiche ausgeschieden. Zur Ermittlung einer allfälligen Abweichung der Produktedicke von einem Sollwert werden die Endprodukte zwischen einer Tastwalze und einer Gegenwalze hindurchgeführt. Dabei besteht die Gefahr einer Verletzung der Teilprodukte. Im weiteren lassen sich geringfügige Dickenunterschiede, die auf das Fehlen eines dünnen Teilproduktes zurückzuführen sind, nicht mit genügend grosser Sicherheit feststellen.

Der vorliegenden Erfindung liegt nun die Aufgabe zugrunde, ein Verfahren der eingangs genannten Art zu schaffen, das eine Ueberprüfung von aus mehreren Teilprodukten zusammengestellten Druckerei-Endprodukten auf Vollständigkeit hin auf einfache, zuverlässige und produkteschonende Weise erlaubt.

Diese Aufgabe wird erfindungsgemäss durch die Merkmale des kennzeichnenden Teils des Anspruches 1 gelöst.

Mit dem erfindungsgemässen Verfahren lässt sich das Fehlen eines Teilproduktes ohne mechanische Einwirkung auf das Endprodukt auf zuverlässige Weise erkennen. Weil die Luminophor-Markierungen praktisch durchsichtig und bei Beleuchtung mit Licht im sichtbaren Spektrum von blossem Auge nicht wahrnehmbar sind, beeinträchtigen sie auf den Teilprodukten aufgedruckte Schrift- oder Bildzeichen nicht.

Aus der FR-A-1 471 367 ist das Markieren eines einzelnen Erzeugnisses mit mehreren Luminophor-Markierungen bekannt. Letztere bestehen je aus einem verschiedenartigen Luminophor mit unterschiedlicher Farbe der Lumineszenz. Zum Ablesen dieser Markierungen werden die unterschiedlichen Farben der Lumineszenz der Markierungen mittels eines auf bestimmte Farben ansprechenden Gerätes analysiert und die dabei gewonnene Information in eine alphanumerische Information, insbesondere in eine binäre Zahleninformation, umgewandelt, die dann vorzugsweise direkt einer EDV-Anlage weitergeleitet wird. Die durch Ablesen der Markierungen gewonnene Information beschränkt sich nun auf eine solche, die nur für das betreffende Erzeugnis charakteristisch ist und somit nur für dieses Erzeugnis allein gilt.

Ferner ist es aus der FR-A-2 030 572 bekannt, Bücher oder Hefte unterschiedlicher Art an einer Schnittkante mit einer von aussen sichtbaren Markierung zu versehen, deren Lage für den Inhalt des Buches bzw. des Heftes charakteristisch ist. Wenn diese Bücher oder Hefte zu einem Stapel gestapelt werden, dient die Markierung nun dazu, im Stapel selbst einen Hinweis auf die Art jedes einzelnen Buches bzw. Heftes zu geben und so das Auffinden der Bücher bzw. Hefte einer bestimmten Art im Stapel zu erleichtern. Im weiteren erlauben diese Markierungen festzustellen, falls Bücher bzw. Hefte einer gewissen Art fehlen. Dabei ist es von Wichtigkeit, dass diese Markierungen von Auge erkennbar sind.

Nachstehend wird nun die Erfindung rein beispielsweise anhand der Zeichnung näher erläutert. Es zeigt:

Fig. 1 sehr schematisch eine mögliche Anordnung zum Auftragen einer Luminophor-Markierung auf aufliegend und im Abstand voneinander fortbewegte Zeitungsteile,

Fig. 2 in perspektivischer Darstellung ein aus drei ineinandergesteckten, gefalteten, unterschiedlichen Teilprodukten bestehendes Druckerei-Endprodukt, und

Fig. 3 eine rein beispielsweise Anordnung, die gestattet, vorbeigeführte Endprodukte der Fig. 2 auf ihre Vollständigkeit zu überprüfen.

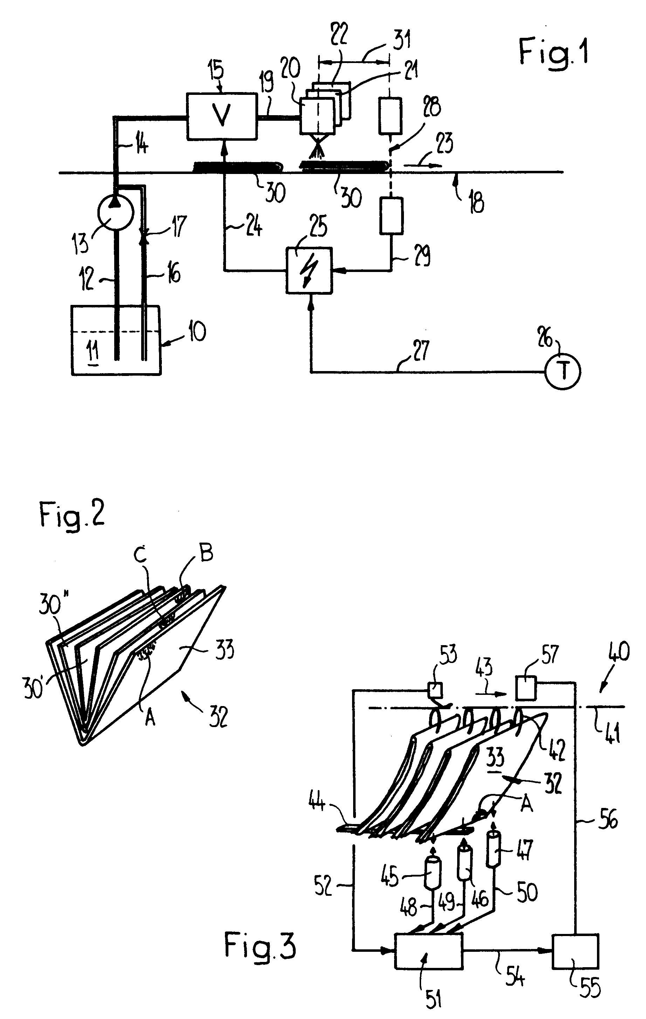

Man erkennt in Fig. 1 einen Vorratsbehälter 10, der einen Vorrat eines flüssigen Luminophors 11, beispielsweise des des unter dem Markennamen "Cartax DP" von der Firma Sandoz AG hergestellten und vertriebenen Luminophors in wässriger Suspension enthält. Ueber eine Saugleitung 12 schöpft eine Pumpe 13 Luminophor 11 aus dem Vorratsbehälter 10 und fördert es über eine Druckleitung 14 an ein elektromagnetisches Ventil 15. Von der Druckleitung 14 zweigt eine Ueberlaufleitung 16 ab, die über ein Ueberdruck- und Drosselventil 17 in den Vorratsbehälter 10 zurückführt. Das von der Ueberlaufleitung 16 in den Vorratsbehälter 10 zurückfliessende Luminophor sorgt dafür, dass das im Vorratsbehälter 10 vorhandene Luminophor 11 ständig umgerührt wird.

Vom Ventil 15 führt eine Ausgangsleitung 19 zu einem Spritzkopf 20, der von oben auf eine nur schematisch angegebene Förderbahn 18 gerichtet ist. Es sind noch zwei weitere Spritzköpfe 21, 22 dargestellt, die neben dem Spritzkopf 20 angeordnet sind und mit diesem eine quer zur Förderrichtung der Förderbahn 18 (Pfeil 23) verlaufende Reihe bilden. Die Druckleitung 19 ist durch nicht näher dargestellte Mittel an einem der Spritzköpfe 20 - 22 anschliessbar. Es kann aber auch nur der Spritzkopf 20 vorgesehen sein und dieser quer zur Förderrichtung 23 verschiebbar und feststellbar angeordnet sein.

Angesteuert wird das Ventil 15 über eine Leitung 24 von einer Steuerschaltung 25, die ihrerseits mit zwei Gebern verbunden ist. Der eine dieser Geber ist ein über eine Leitung 27 an die Steuerschaltung 25 angeschlossener Tachogenerator bzw. Taktgeber 26, dessen Ausgangssignal von der Fördergeschwindigkeit der Förderbahn 18 abhängt. Der andere Geber ist durch eine Lichtschranke 28 gebildet, die über eine Leitung 29 an die Steuerschaltung 25 angeschlossen ist.

Auf der Förderbahn 18 werden kontinuierlich Zeitungsteile, beispielsweise Vorprodukte 30, in einem Abstand voneinander unter den Spritzköpfen 20 - 22 hindurchgeführt. Die Reihe dieser Spritzköpfe 20 - 22 ist in einem Abstand 31 von der Lichtschranke 28 angeordnet, welcher Abstand etwas kleiner ist, als das in Förderrichtung 18 gemessene Mass der Vorprodukte 30. Die Reihe der Spritzköpfe 20 - 22 beansprucht eine Breite, die innerhalb des quer zur Förderrichtung 23 gemessenen Masses der Vorprodukte 30 liegt.

Wenn nun die vorlaufende Kante eines der Vorprodukte 30 die Lichtschranke 28 unterbricht, veranlasst dieser Unterbruch die Steuerschaltung 25 nach Massgabe der vom Taktgeber 26 erhaltenen Taktsignale über die Leitung 24 einen Impuls an das Ventil 15 abzugeben, das daraufhin kurz öffnet, wodurch der an das Ventil 15 angeschlossene Spritzkopf, hier der Spritzkopf 20, stossweise Luminophor verspritzt. Dies ergibt im Bereich des nachlaufenden Randes des Vorproduktes 30 einschliesslich der anschliessenden Kante einen Luminophor-Fleck, dessen Form im wesentlichen durch die Form des den Spritzkopf verlassenen Sprühstrahles gegeben ist. Im vorliegenden Falle wird der Luminophor-Fleck im Bereich der dem Betrachter näher erscheinenden, nachlaufenden Ecke des Vorproduktes 30 entstehen. Entscheidend ist hier aber weniger die Form des Luminophor-Flecks, sondern dass dieser einen Randbereich und die daran anschliessende Kante des Vorproduktes bedeckt. Es wird sich noch zeigen, dass auch die Stelle innerhalb dieses Randbereiches, auf die der Luminophor-Fleck aufgespritzt wird, seine Bedeutung hat. Würde nämlich die Leitung 19 an den Spritzkopf 21 angeschlossen, entstünde ein Luminophor-Fleck im mittleren Bereich des nachlaufenden Randes des Vorproduktes 30.

Aus dem Gesagten ergibt sich, dass selbst wenn man die mit einem Luminophor-Fleck versehenen Vorprodukte zu einem herkömmlichen Stapel stapeln würde, die Markierung und die Bezugslage derselben auf dem Druckprodukt noch erkennbar bleibt.

Anstelle der in Fig. 1 dargestellten Einrichtung, die dazu eingerichtet ist, die Vorprodukte 30 einzeln zu markieren, könnte auch eine einfachere Vorrichtung vorgesehen sein, die im wesentlichen einen kontinuierlich beschickten Spritzkopf aufweist. Dann wären die Vorprodukte in einer geschlossenen, zum Beispiel geschuppten Formation unter dem Spritzkopf hindurchzuführen. Damit müsste das Ventil 15 nur bei Beginn des Durchlaufes der geschlossenen Formation geöffnet und nach dem Ende des Durchlaufes wieder geschlossen werden. Die dabei entstehende Markierung hätte dann die Form eines bis an den Rand des Vorproduktes laufenden Streifens.

In Fig. 2 ist ein Endprodukt 32 zu erkennen, das aus zwei Vorprodukten 30', 30" und aus einem Hauptprodukt 33 zusammengesetzt ist. Die Vorprodukte 30', 30" und das Hauptprodukt 33 sind gefaltet, wobei das Vorprodukt 30' in das Vorprodukt 30" und dieses mit dem Vorprodukt 30' in das Hauptprodukt 33 eingesteckt ist. Im Bereich der dem Falz gegenüberliegenden Schnittkante trägt das Hauptprodukt 33 an der dem Betrachter näher erscheinenden Ecke eine Luminophor-Markierung A, das Vorprodukt 30' an der dem Betrachter entfernter erscheinenden Ecke eine Luminophor-Markierung B und das Vorprodukt 30" im mittleren Bereich der Schnittkante eine Luminophor-Markierung C. Auch wenn das Endprodukt 32 aus dem dargestellten, halboffenen Zustand geschlossen wird, bleiben die Luminophor-Markierungen A, B, C an den entsprechenden, dem Falz gegenüberliegenden Schnittkanten erkennbar.

Damit bietet sich eine einfache Möglichkeit, die Vollständigkeit eines aus mehreren, unterschiedlichen Teilprodukten zusammengesetztes Endprodukt maschinell und automatisch zu überprüfen.

Eine diesbezügliche Einrichtung ist sehr schematisiert in Fig. 3 dargestellt. In Fig. 3 ist ein Einzelförderer 40 in Ueberkopfbauweise dargestellt, der mit im Abstand voneinander an einem Zugorgan 41 befestigten, gesteuerten Greifern 42 versehen ist. Der Einzelförderer 40 ist durch nicht dargestellte Mittel in Richtung des Pfeiles 43 angetrieben. Jeder der Greifer 42 erfasst ein Endprodukt 32 etwa mittig im Bereich des Falzes, so dass das Endprodukt 32 im Prinzip hängend mit seiner dem Falz gegenüberliegenden Kante auf einer Schiene 44 gleitend gefördert wird. Die Endprodukte 32 seien beispielsweise gleich zusammengesetzt wie anhand Fig. 2 erläutert.

Unterhalb der Schiene 44, jedoch durch diese nicht behindert, ist eine Anzahl - im vorliegenden Falle drei - mit 45, 46 und 47 bezeichneter Lumineszenztaster vorhanden, und zwar in einer Anordnung, die einer Ueberlagerung der drei Stellen entspricht, auf denen auf dem Hauptprodukt 33 und an den beiden Vorprodukten 30', 30" der Fig. 2 die Luminophor-Markierungen A, B und C vorhanden sind.

Als Lumineszenztaster 45 - 47 können handelsübliche Geräte, beispielsweise die von der Firma Erwin Sick GmbH, Optik-Elektronik, in Waldkirch, Deutschland, unter der Typenbezeichnung LUT 1-4 hergestellte und vertriebene Lumineszenztaster verwendet werden. Diese umfassen eine Strahlungsquelle, die moduliertes UV-Licht mit einer Wellenlänge von etwa 365 nm abstrahlt, und einen Empfänger, der auf angeregte Lumineszenz derselben Modulationsfrequenz im Wellenlängenbereich von etwa 450 - 1000 nm anspricht. Diese Lumineszenztaster können auf "hell" oder auf "dunkel" geschaltet werden, d.h. zur Abgabe eines Signals veranlasst werden, wenn der Empfänger anspricht oder wenn dieser nicht anspricht.

Die dargestellten Lumineszenztaster sind je über eine Leitung 48, 49, 50 an eine Auswerteschaltung 51 angeschlossen. Diese Auswerteschaltung wird über eine Leitung 52 von einem Geber 53 aktiviert, der seinerseits dazu eingerichtet ist, ein Aktivierungssignal nur dann abzugeben, wenn ein mit einem Endprodukt 32 beladener Greifer 42 vorbeiläuft. In aktiviertem Zustand wirkt die Auswerteschaltung im wesentlichen wie ein NAND-Gatter mit drei Eingängen, an die die Leitung 48 - 50 angeschlossen sind. Der Ausgang der Auswerteschaltung 51 ist mit 54 bezeichnet, und steuert ein Verstärkerelement 55 an, das seinerseits über eine Leitung 56 mit einem Auslösemechanismus 57 verbunden ist. Dieser ist dazu eingerichtet - wenn aktiviert -, den gerade vorbeilaufenden Greifer 42 in Offenstellung zu bringen, wodurch das durch diesen gehaltene Endprodukt ausgeschieden wird.

Solange jedes der an den Lumineszenztastern 45 - 47 vorbeigeführte Endprodukt 32 vollständig ist, d.h. aus dem Hauptprodukt 33 und den beiden Vorprodukten 30' und 30" besteht, wird jeder der Empfänger der Lumineszenztaster 45 - 47 ansprechen und auf der Leitung 54 wird kein Fehlersignal entstehen, so dass der Auslösemechanismus 57 nicht in Funktion tritt.

In den bisherigen Beispielen sind die Luminophor-Markierungen im Bereich des dem Falz gegenüberliegenden Randes aufgetragen worden. Die Luminophor-Markierungen können aber auch an einer Stelles eines der an den Falz anschliessenden Ränder der Produkte angebracht werden, wenn es um die Ueberprüfung der Vollständigkeit eines zusammengesetzten Endproduktes geht.

Wenn die Papiererzeugnisse Druckereiprodukte sind, kann die Markierung mit dem Luminophor sogar im Zuge des Druckes erfolgen. Wichtig ist lediglich, dass die Markierung an einer für die Art des Druckereiproduktes charakteristischen Stelle eines Randbereiches einschliesslich der anschliessenden Kante erfolgt.

## Patentansprüche

1. Verfahren zum Ueberprüfen auf Vollständigkeit von jeweils aus mehreren Teilprodukten (30' 30", 33) unterschiedlicher Art bestehenden, mehrblättrigen Druckerei-Endprodukten (32), die jeweils durch Ineinanderlegen der Teilprodukte (30', 30", 33) hergestellt werden, dadurch gekennzeichnet, dass vor dem Ineinanderlegen der Teilprodukte (30', 30", 33) jedes derselben an einem seiner im Endprodukt (32) zugänglichen Randbereiche einschliesslich der anschliessenden Kante an einer artspezifischen Stelle mit einer Markierung (A, B, C) aus einem Luminophor versehen wird, dass nach dem Ineinanderlegen der Teilprodukte (30', 30", 33) das Endprodukt (32) mittels Lumineszenztastern (45, 46, 47) abgetastet wird, deren Anordnung der Ueberlagerung der artspezifischen Stellen der in einem vollständigen Endprodukt (32) vorhandenen Teilprodukte (30', 30", 33) entspricht, und dass beim Feststellen des Fehlens eines Teilproduktes (30', 30", 33) in einem Endprodukt (32) ein Signal erzeugt wird.

2. Verfahren nach Anspruch 1, dadurch gekennzeichnet, dass die Endprodukte (32) an den ortsfest angeordneten Lumineszenztastern (45, 46, 47) vorbeigeführt werden.

3. Verfahren nach Anspruch 1 oder 2, dadurch gekennzeichnet, dass die artspezifischen Markierungen (A, B, C) auf den Teilprodukten (30', 30", 33) im Endprodukt (32) gleichzeitig abgelesen werden.

4. Verfahren nach einem der Ansprüche 1 bis 3, dadurch gekennzeichnet, dass die Lumineszenztaster (45, 46, 47) jeweils bei Anwesenheit eines Endproduktes (32) aktiviert werden.

5. Verfahren nach Anspruch 4, dadurch gekennzeichnet, dass bei aktivierten Lumineszenztastern (45, 46, 47) und bei fehlendem Ansprechen eines derselben ein ein Ausscheiden des betreffenden Endproduktes (32) bewirkendes Signal erzeugt wird.

6. Verfahren nach Anspruch 1, dadurch gekennzeichnet, dass das Luminophor auf die Teilprodukte (30', 30" 33) aufgespritzt wird.

7. Verfahren nach Anspruch 1 oder 6, dadurch gekennzeichnet, dass die Teilprodukte (30', 30", 33) an einer Auftragungsvorrichtung (20, 21, 22) für das Luminophor vorbeibewegt werden, welche ihrerseits durch die Anwesenheit jeweils eines Teilproduktes (30', 30", 33) aktiviert wird.

8. Verfahren nach Anspruch 1 oder 6 zum Markieren von in einem Schuppenstrom geförderten, gefalteten Teilprodukten (30', 30", 33), dadurch gekennzeichnet, dass das Luminophor jeweils auf dem dem Falz gegenüberliegenden und/oder auf einem an den Falz anschliessenden Randbereich des gefalteten Teilproduktes (30', 30", 33) aufgetragen wird.

## Claims

1. A method of checking for completeness multisheet end products (32) from printing shops and which consist of in each case a plurality of partial products (30', 30", 33), of various types and which are produced in each case by interfolding the partial products (30', 30", 33), characterised in that prior to the interfolding of the partial products (30', 30", 33) each thereof is provided on one of its marginal areas which is accessible in the end product (32), including the adjacent edge and at some type-specific location, with a marking (A, B, C), from a luminophore, and in that after the interfolding of the partial products (30', 30", 33) the end product (32) is scanned by luminescence sensors (45, 46, 47) the disposition of which corresponds to the type-specific locations of the partial products (30', 30", 33) present in a complete end product (32) and in that when the absence of a partial product (30', 30", 33) in an end product (32) is established a signal is generated.

2. A method according to claim 1, characterised in that the end products (32) are passed by the rigidly disposed luminescence sensors (45, 46, 47).

3. A method according to claim 1 or 2, characterised in that the type-specific markings (A, B, C) on the partial products (30', 30", 33) are at the same time scanned on the end product (32).

4. A method according to one of claims 1 to 3, characterised in that the luminescence sensors (45, 46, 47) are in each case activated upon the presence of an end product (32).

5. A method according to claim 4, characterised in that when the luminescence sensors (45, 46, 47) are activated and when there is a lack of response of one of them a signal is generated which causes ejection of the relevant end product (32).

6. A method according to claim 1, characterised in that the luminophore is sprayed onto the partial products (30', 30", 33).

7. A method according to claim 1 or 6, characterised in that the partial products (30', 30", 33) are passed by a luminophore applicating device (20, 21, 22) which is in turn activated by the presence of a partial product (30', 30", 33).

8. A method according to claim 1 or 6 for marking folded partial products (30', 30", 33) which are delivered in an imbricated flow, characterised in that the luminophore is in each case applied to that marginal portion of the folded partial products (30', 30", 33) which is opposite the crease and/or adjacent the crease.

## Revendications

1. Procédé pour vérifier que des produits d'imprimerie finis de plusieurs pages (32) soient complets, produits finis se composant de plusieurs produits partiels (30',30",33) de nature différente qui sont obtenus chacun par l'insertion les uns dans les autres des produits partiels (30',30",33), caractérisé par le fait qu'avant l'insertion des produits partiels (30,30",33) les uns dans les autres chacun d'eux reçoit un marquage (A,B,C) à l'aide d'un luminophore, marquage se situant sur des parties du bord, y compris la tranche, accessible sur le produit fini (32), à un emplacement spécifique de sa nature, qu'après l'insertion les uns dans les autres des produits partiels (30',30",33) le produit fini (32) est observé à l'aide de détecteurs de luminescence (45,46,47) dont la disposition correspond à la disposition de la superposition des emplacements spécifiques des produits partiels (30',30",33) présents dans un produit fini (32) complet, et que lors de la mise en évidence du manque d'un produit partiel (30',30",33) dans un produit fini (32) un signal est produit.

2. Procédé selon la revendication 1, caractérisé par le fait que le produit fini (32) défile devant les détecteurs de luminescence (45,46,47) stationnaires.

3. Procédé selon la revendication 1 ou la revendication 2, caractérisé par le fait que les marquages spécifiques (A,B,C) sur les produits partiels (30',30",33) du produit fini (32) sont détectés simultanément.

4. Procédé selon l'une des revendication 1 à 3, caractérisé par le fait que les détecteurs de luminescence (45,46,47) sont activés lors de la présence d'un produit fini (32).

5. Procédé selon la revendication 4, caractérisé par le fait que lorsque les détecteurs de luminescence (45,46,47) sont activés et qu'une réponse d'un de ceux-ci manque, un signal d'évacuation du produit fini (32) correspondant est généré.

6. Procédé selon la revendication 1, caractérisé par le fait qu'on gicle le luminophore sur les produits partiels (30',30",33).

7. Procédé selon la revendication 1 ou la revendication 6, caractérisé par le fait que les produits partiels (30',30",33) sont déplacés en regard de dispositif d'application (20,21,22) du luminophore, ces derniers étant activés par la présence d'un produit partiel (30',30",33) respectivement.

8. Procédé selon la revendication 1 ou la revendication 6 pour le marquage de produits partiels (30',30",33) pliés entrainés sous la forme d'un courant d'écailles, caractérisé par le fait que le luminophore est apposé sur le bord opposé au pli et/ou sur un bord jouxtant le pli des produits partiels respectifs (30',30",33).

Fig.1

Fig.2

Fig.3